# EUROPEAN PATENT SPECIFICATION

(11) **EP 1 506 083 B1**
(45) Date of publication and mention of the grant of the patent: **10.08.2016**
(21) Application number: 03724682.4
(22) Date of filing: 22.05.2003
(51) Int. Cl.: B29C 70/24, B29C 70/52

(54) **METHOD AND DEVICE FOR THE PRODUCTION OF A COMPOSITE LAMINATE**
VERFAHREN UND VORRICHTUNG ZUR HERSTELLUNG EINES VERBUNDLAMINATS
PROCÉDÉ ET DISPOSITIF DE PRODUCTION D'UN STRATIFIÉ COMPOSITE

(30) Priority: 22.05.2002 BE 200200334; 09.04.2003 EP 03447086
(43) Date of publication of application: 16.02.2005
(73) Proprietor: Groep Stevens International, Naamloze Vennootschap, 9160 Lokeren (BE)
(72) Inventor: VERHAEGHE, Jan, B-9120 Beveren (BE)
(74) Representative: Algemeen Octrooi- en Merkenbureau B.V.
(86) International application number: PCT/BE2003/000092
(87) International publication number: WO 2003/097335

(56) References cited:
- EP-A- 0 356 930
- WO-A-99/19137
- US-A- 3 647 606
- US-A- 4 876 973
- US-A- 5 741 574

## Description

The present invention relates to a method and device for obtaining laminated composite material.

US-A-3.647.606 discloses a method for manufacturing a semirigid multilayer thermal insulating structure. The insulating structure comprises a preassembled stack of radiation reflective layers alternating with and separated by layers of low conductive material such as glass fiber matting. These layers are bonded to a thread of column material.

US-A-4.876. 973 discloses the possibility of meeting increased performance demands placed on aerospace vehicles, in particular to the production materials used therein. To meets these demands there has been an increasing emphasis on the development of composite materials because of their high strength to weight ratio. Often the composite material is built up of a resinous sheet reinforced with layers of fibrous reinforcing material. From the start on there has been a need to find an optimum method of connecting the fibrous reinforcing material to the resinous core, so as to allow accommodating shear and tensile loading between the skin and the load carrying sub structure. Stitching is one of the proposed methods for fastening a skin to a substructure. To overcome the need of having access to both sides of the composite material, the method of blind stitching has been proposed. In this method use is made of an apparatus comprising a self-threading needle mounted on a vertically reciprocating needle shaft. As a stack of a plurality of superimposed, uncured pre-impregnated laminates is forwarded, a needle shaft performs a vertically reciprocating action. On each downward stroke, a thread is picked up by the needle and carried through the laminate stack to form a loop of constant size as the needle is extracted from the laminate upon an upward stroke. A continuous series of stitches is formed by forwarding either the composite material through the machine, or by moving the machine with respect to the composite material.

US-A-5.741. 574 aims at providing a sandwich structure which is stronger than a foam core or reinforcing columnar members present therein alone, which shows an improved interlaminar strength and compressive load transfer, which is not subject to premature core buckling and combines the advantages of both truss and foam cores. According to US-A-5.741.574 improved impact and moisture resistance is achieved by the use of a foam core; the structural integrity of the face sheets and the face sheet/core interface are improved over the foam or truss structure alone by incorporating the truss structure into the foam core and laminating the fibre tow members within the face sheets. The surrounding of the tow members by the foam counteracts buckling. According to the method disclosed in US-A-5.741.574, one or more plies of face sheet are assembled with a foam core by applying and adhesive between them. On top of the face sheets a ply of a woven surface sheet is applied. Fibre tows are stitched so as to extend through the foam core and to interlock with the face sheets. With stitch angles of about 20-70° the overall core failure is determined by the fibre failure. Below 20 and above 70° the stiffness of the fiber load path decreases rapidly and the foam shear strength is controlling. At 0 and 90° the fibres have zero effective stiffness in shear and the overall core shear strength and stiffness are equal to that of the foam alone. When the sandwich structure is cured a portion of each stitch loop is laminated into the face sheets lying between the woven surface ply and the rest of the laminate.

However, the above described known methods which aim at adding z-axis reinforcement all make use of the method of stitching of the laminate, which is laborious and time consuming. The known methods have as a main advantage that the connection of the sheets is limited to the stitching lines and that the spacing between adjacent stitchings is too large. As a consequence, the reinforcement provided in z-direction is still insufficient.

From WO99/19137 there is known a three dimensional strengthening material for use as textile reinforcement in composites, the textile material taking the form of a woven fabric, mat, membrane, non-woven, knit or combinations thereof. Strengthening in X-Y direction is provided by the textile material. Strengthening in Z-direction is achieved by the presence of piles tufted into textile material and extending substantially in Z-direction. Pile is understood to mean a loop- or thread-like fibre or fibre bundle, which may be made of for example glass fibre, aramid fibre, carbon fibre, synthetic fibres such as polyester, polypropylene, polyethylene, polyamide, vegetable fibres such as flax, cotton, jute, animal fibres such as wool, and the like. A composite material is produced by impregnating two outer layers of reinforcing textile with a resin, the piles or threads extending inward from the outer layer. The piles or threads are anchored in a synthetic resin or a foamed synthetic resin sandwiched between the outer reinforcing textile layers. These composite materials are suitable for use in plastic products requiring high impact resistance, such as car bumpers, boats and the like.

However, in the composite material of WO99/19137 the compressive and shear strength in z-direction are insufficient as well as the interlaminar strength, the latter entailing an unwanted risk to delamination of the laminate.

There is thus a need to a method for producing a composite laminate, providing an improved interlaminar strength and an improved reinforcement in Z-direction, which is less laborious and time consuming than the hereto known methods.

It is therefore the aim of the present invention to provide an economically feasible method with which the reinforcement of a composite laminate in z-direction may be further improved.

This is achieved according to the present invention, with the technical features of claim 1.

According to this invention, the first and second face sheets of fibrous reinforcing material sandwich between them a central layer of a core material. The face sheets and core material are connected to each other and the Z-direction reinforcement fibres are introduced by the technique of tufting. As the tufting material use is made of a substantially continuous fibrous reinforcing material.

By using the process of tufting, the first face sheet is not only connected to the core but also to the second face sheet. As use can be made of industrially available tufting machines, whereby the tufting process needs to be adapted to the thickness of the composite material. In the process of tufting, a continuous fibrous material is inserted using a plurality needles reciprocating in Z-direction through the laminate, while the laminate is advanced through the device. The fibrous reinforcing material is inserted from the first face sheet, through the core material and the second face sheet. The part of the fibrous reinforcing material extending through the second face sheet is temporarily withheld by a hook to form a looper, and returned through respectively the second face sheet, the core material and the first face sheet.

An analysis of the problems occurring with existing techniques for connecting the layers of a composite laminate has shown that in the process of stitching one single needle is used to apply one row of stitches after the other. This is time consuming. Moreover, in most industrially available stitching devices access to both sides of the laminate is a prerequisite. The use of the tufting process has the advantage that in one single process step, simultaneously a plurality of rows of the fibrous material are applied, which extend over substantially the entire width of a laminate. In the process of tufting it is sufficient to have access to only one side of the laminate. In addition to this, the technique of tufting in which the laminate is forwarded through the device in a stepwise manner, is suitable for being adapted to be used in combination with the process of pulltrusion with the aim of producing panels with large dimensions, in particular a long length in a substantially continuous process.

The process of tufting has the additional advantage that the tufting connection extends uniformly over the whole surface, i. e. in x-and y-direction, of the laminate. If so desired however, the tufting process can be limited to certain parts of the laminate.

The distance between subsequent Z-direction reinforcements within one row will be adapted by the man skilled in the art taking account of the intended use of the laminate. The distance between adjacent Z- direction fibrous reinforcements may be the same within one row or may differ depending on the position at the laminate. The distance between adjacent Z- direction fibrous reinforcements within two adjacent may be the same or different.

The distance between adjacent rows of tufted Z-fibrous reinforcement may be the same over the whole laminate or may be different, depending on the intended use of the laminate.

Tufting is a process which up to now has been used for the process of making carpets, wherein a dense layer of loops or piles to be walked on is created on a supporting web. In the technique of producing tufted carpets, the tufts are inserted by means of vertically reciprocating needles pushing through a pre-woven net of a backing material and are held below the carpet backing by loopers. The loopers are fixed to the backing through impregnation with an adhesive backing, for example a latex or a foam.

The process of tufting has never been used as a process for simultaneously connecting together two or more layers of a composite laminate the composite material having a thickness of one or a few cm, with the aim of introducing a reinforcement structure extending mainly in Z-direction. The technique for connecting together two or more layers of a fabric or mat generally known to the man skilled in the art is the technique of stitching.

In stead of tufting, use can be made of any technique with which a substantially continuous fibrous material is inserted through one of the first and second layer of fibrous reinforcing material, extends through the core material and into or through the other of the first and second layer of fibrous reinforcing material. The fibrous material preferably extends in Z-direction perpendicular to the first and second face sheet and the interface between the face sheets and the core material, but may extend in any other direction as well. The fibrous reinforcing material introduced by means of tufting may extend perpendicular to or slant with respect to the first and second face sheets or the interface between the core material and the face sheets. To provide maximum strength it is however preferred that the fibrous reinforcing material extends substantially perpendicular to the first and second face sheet and throughout the core material.

As the substantially continuous fibrous tufting material use can be made of fibrous materials in the form of tows, threads, bundles, yarns or rovings, comprising a plurality of fibre bundles or twined or torsioned fibres, which may be built up of a single material or a combination of two or more different materials. The angle under which twined fibres extend with respect to each other will be adapted taking into account the envisaged compressive strength.

The nature of the fibrous material used is not critical to the invention, and may be selected from natural fibres, for example metal fibres, mineral fibres, glass fibres, carbon fibres, wool, cotton, flax etc; or synthetic fibres, for example polyester, polypropylene, polyethylene, polyamide, or mixtures of two or more of these fibres. However, because of its high impact strength the use of aramid fibres is preferred.

The positioning of the Z-direction fibres is not critical to the invention, although it may be preferred to group the fibres in certain patterns. If it is desired to create Z-direction fibre columns which provide an improved resistance to kinking or bending, preferably the fibrous reinforcement introduced by means of the tufting process is inserted in the form of groups of three or four or more fibres or fibre strands or tows. In that case the fibre columns provide an improved resistance to kinking or bending, the foam providing the majority of the pressure resistance.

The nature of material of which the core is made is not critical to the invention. Mostly use will be made of a foamed plastic material, for example foamed polyethylene, polypropylene, polyurethane, ethylenepropylene copolymer. The core can however also be made of a foamed metal or a metal containing foam.

The use of polyurethane is preferred as it is a relatively cheap material, which is readily industrially available and has a sufficiently high thermal resistance to withstand oven temperatures used to cure the resin with which the laminate is impregnated.

Particularly preferred is low density polyurethane foam having a density of between 2-5 pound/foot³, as this type of foam shows a good thermal resistance, in particular when envisaging use as a wall or part of a wall for cooled containers. Although this type of polyurethane may be rather light, the reinforcement provided by the presence of the tufting fibres provides the required strength in z-direction.

It is however also possible to use as the core material two or more superimposed layers of foamed material, subsequent layers of foamed material sandwiching between them a layer of a fibrous reinforcing material. Superimposed foam layers may be made of the same material or of different materials. The nature of the fibrous reinforcing material sandwiched between two foamed cores is not critical to the invention, although it is preferred to use a fabric or a mat of a woven or non-woven material.

The method for producing the composite laminate of this invention comprises the steps of
(1) forwarding the core material,
(2) forwarding the first and second face sheets of fibrous reinforcing material along opposite sides of the core material to form a multi layer laminate,
(3) subjecting the laminate to the process of tufting or any process as described above, to connect the layers of the laminate together
(4) impregnating the tufted laminate with a plastic material in a process of pultrusion.
The process of pultrusion is preferred over the conventional moulding as it is a suitable technique for producing panels with large dimensions, in particular a long, length. The panels can be fed through the pultrusion device in a continuous manner, the use of a mould for shaping the product can be dispensed with.

The core material may be used in the form of a plurality of individual prefabricated plates of foamed plastic. It is however also possible to precede the process of this invention with a step of manufacturing foamed panels.

The plastic material used to impregnate the tufted laminated may be a thermosetting or thermoplastic resin. Suitable thermosetting materials for use in the present invention include thermosetting unsaturated polyester resins, vinylester resins, epoxy resins, phenolic resins, polyurethane resins.

In the composite laminate of this invention, the first and second face sheets of fibrous reinforcing material will mostly be made of a sheet, a fabric or mat of a fibrous reinforcing material, which may be pre-impregnated with a thermoplastic or thermosetting resin or not, which may be a woven or non-woven product. The material of which the first and second face sheets are made may be the same or different. It is however also possible to apply to each side of the core two or more fabrics or mats, which may be made of the same or a different material. It is further possible to have one or more of the face sheets built up of alternating first and second materials, for example alternating glass fibre mats and mats comprising a mixture of glass fibre and metal fibre. However, such a fibrous reinforcing material may also be present at a more central position of the laminate.

If it is the aim of improving the strength of the laminate, on a side of the laminate which is to be subjected to the more severe circumstances, it is preferred to insert a fibrous reinforcing mat or fabric which comprises metal fibres. The inventor has found that the use of metal fibre containing fabrics or mats improves the pressure resistance, the weight increase of the material being negligible. For example in case the laminate is used as a base for a tip wagon, the side of the laminate opposite the side facing the container volume of the wagon will mostly comprise a metal fibre comprising fabric. The reason is that the side of the laminate opposite the side facing the container volume of the wagon will be subjected to the larger forces.

The nature of the fibrous material of which the fabric or mat is made is not critical to the invention, and may be selected from natural fibres, for example mineral fibres, glass fibres, carbon fibres, wool, cotton, flax etc; or synthetic fibres, for example polyester, polypropylene, polyethylene, polyamide. The fabric or mat may also comprise a combination of two or more types of these fibres. An example of such a material is Twintex®.

The present invention also relates to a composite laminate comprising at least a first and second layer of a fibrous reinforcing material sandwiching between them a core, the first and second layer and core being connected to each other by means of tufting with a fibrous material.

This laminate, especially in case foamed polyurethane is used as the core material, presents the advantage that as long as the laminate has not been cured, the panel may still be shaped by slightly heating it or placing it in a slightly heated mould: In that way the shape of the panel may be adapted to the intended use.

The laminate of this invention and obtained with the process of this invention presents the additional advantage of showing a limited temporary deformation when a force is applied to the surface, the deformation disappearing as soon as the force is withdrawn. This can for example happen with a heavily loaded container, the side walls of which are made of the laminate of this invention. The inventor believes that this must be attributed to the fact that although the foam core may be damaged by the applied force, the fibres will be capable of withstanding this force and be subjected to a minimum damage. As a consequence when removing the force, the fibrous reinforcement will force the panel to take its original configuration.

The present invention further relates to a device according to claim 10, which is suitable for producing the above described composite laminate.

The device of this invention comprises means for feeding a first and a second laminar reinforcing material on opposite sides of a core to a tufting device for tufting the first and second laminate and the core together, and means for advancing the laminate in a stepwise manner through the tufting device.

The fabric or mat of fibrous reinforcing material forming the first and second face sheet will mostly be provided in the form of rolls comprising a large length of the mat or fabric, which are unrolled when one or both sides of the foamed core are covered with the fabric or mat. Because of the large number of adjacent rows of tufting fibres, the process of tufting entails the advantage that the strength of the laminate is hardly affected at a position where an interruption of the feed of fibrous reinforcing material occurs, because a roll of the mat or fabric ends and another roll is commenced. In case a plurality of superimposed mats or fabrics of the same or different fibrous reinforcing material are applied to the foamed core, the rolls of fibrous reinforcing material are preferably positioned such that the positions at which the respective rolls come to an end are shifted with respect to each other in length direction of the laminate.

To allow obtaining a final product, the device further comprises a pulltrusion device for impregnating the tufted composite laminate with a plastic material. The device further preferably comprises a heated chamber for hardening or curing the impregnated composite laminate. At a position in front of the heated chamber, the device may comprise a heated mould for slightly heating the laminate with the aim of rendering the laminate, in particular the core material more flexible and shaping the laminate.

The composite panels of the present invention or obtained with the process of the present invention are suitable for use in a wide variety of applications where a high impact strength and flexural strength is aimed at.

In a first possible application of the composite laminate of this invention, at least one of the opposite surfaces of the first and second face sheets are coated with an outer decorative layer for use of the panel as or as part of a separation wall. Because of its high impact strength in case aramide fibres are used as the tufting material, such a panel is particularly suitable for use as a bullet free and/or blast proof separation wall in for example air planes.

In that case each of the first and second outer layer of the laminate will mostly contain a layer of glass fibre reinforced mat or fabric, a metal fibre containing mat or fabric and an additional glass fibre based mat or fabric. The first and second outer layer sandwich between them a layer of a foamed plastic material.

In a second possible application the composite laminate of the present invention is used as a or as part of a prefab wall in the construction of containers or buildings. In that case the sides of the laminate will preferably be made such that the sides of adjacent laminates have complementary, engaging profiles.

In a third possible application, the panel of this invention is used in the production of an undercarriage for a vehicle, in particular in the production of a so called camber. A camber is an undercarriage which has a concave shape as it is subjected to pre-stress forces. The undercarriage of the present invention comprises a plurality of longitudinal beams, having a top surface facing the load and a bottom face connected to the drive mechanism. At least one longitudinal beam is subjected to a pre-stressing, such that the concave shape is created. In the pre-stressed state, a composite laminate of this invention is connected to the top surface of the longitudinal beam. The connection can be carried out by mechanical connecting means, or chemically using an adhesive. When releasing the pre-stressing, the longitudinal composite beam maintains the concave shape and shows a good resistance to buckling. When loaded, the concave shape of the beam changes to a more flat condition, depending on the weight imposed by the load.

In a fourth possible application, the laminate of this invention or the laminate obtained with the process of this invention is used for manufacturing a column.

With the process and device of this invention namely laminates of large length can be produced which are made of one piece: the reason is that the fibrous reinforcing material applied to the opposite side faces of the core may be supplied in the form of a mat or fabric having a large length of a few hundred meters or even more. The inventor has now found that the laminate of this invention shows an improved stiffness and bending strength as compared to the conventionally used metal columns. Therefore the laminate of this invention is a suitable material for the production of columns with a large height of a few to 20 or even 50 meter or more. As such, the laminate of this invention is suitable for use as a column of a windmill.

The laminate of this invention may further be used in the manufacturing of columns for electricity transmission and distribution, panels used as top surface for temporary or permanent airport landing and take off strips, or bridges, vehicle undercarriage etc. i. e. those applications where a good pressure and bending resistance is required.

The present invention is further illustrated in the appending figures and description of the figures.
Figure 1 shows a cross section of the device of the present invention.
Figure 2 and 3 show preferred embodiments of the device of this invention.

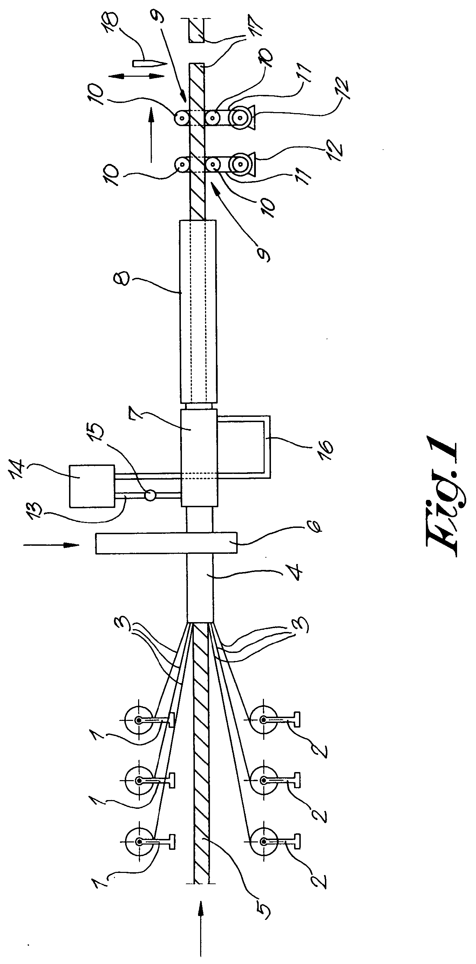

The device shown in figure 1 comprises a first and second feeding 1,2 for feeding a first and second fibrous reinforcing material or sheet in the form of a fabric or mat on opposite sides of a longitudinal core material 5. The first and second feeding may for example comprise a first and second roll 1,2 located on opposite sides of the core material 5. The first and second feeding may also comprise a plurality of first and second rolls 1,2 for feeding a plurality of super imposed first and second fibrous reinforcing sheets.

The core material 5 is inserted in the device as a continuous panel or beam. The dimensions of the panel or beam in x, y and z direction are not critical to the invention and may vary within wide ranges. Within the framework of this invention, it is possible to couple the present device to an extruder for producing longitudinal core materials, preferably in a continuous manner.

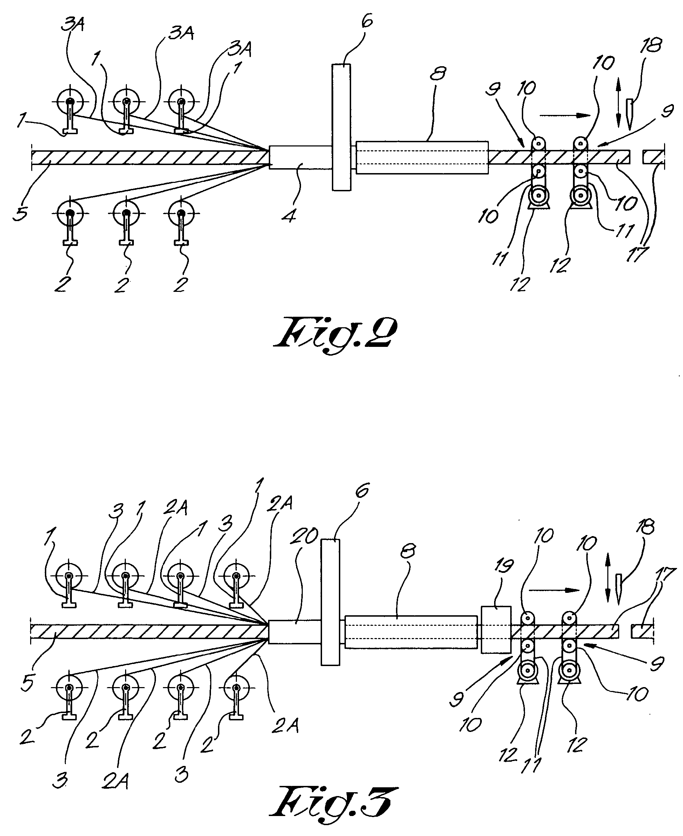

The device of this invention may comprise a guiding 4 for guiding the displacement of the first and second layer of laminar fibrous reinforcing material sandwiching the core 5 between them towards a tufting device 6. The guiding may take the form of a pre-heating chamber 20 as is shown in figure 3.

The nature of the tufting device used in the present invention is not critical and may be a conventional device used in the tufting of carpets. The tufting device comprises a bundle of needles, for drawing the tufting fibres from a first side of the composite material through the composite laminate 5 towards an opposite second side. The tufting device comprises a plurality of hooks for maintaining a loop of the tufting fibre at the second side as the needles are returned to the first side.

The material to be tufted may have the same width as the tufting device, or a smaller or a larger width. In the latter case, preferably use is made of a tufting device the needles of which are displaceable in cross direction of the device and the core. Tufting in longitudinal direction is done in a stepwise, discontinuous manner, according to which the displacement of the laminate throughout the tufting device is interrupted in the course of each downward and upward movement of the needles. It is however also possible to use a device the needles and hooks of which are displaceable in longitudinal direction of the device.

The device of this invention further comprises a pulltrusion device which may have an impregnation chamber 7 for impregnating the composite laminate with a liquid plastic material. The impregnation chamber 7 may comprise a conduit 13 for feeding the liquid plastic material from a reservoir 14 to the impregnation chamber, and injecting the liquid plastic material under a slight over pressure. Excess plastic material is returned to the reservoir 14 through a second conduit 16.

The device of this invention preferably comprises a device 8 or heated chamber for hardening or curing the plastic material of the thus impregnated composite laminate. The residence time in the heating chamber 8 is selected such that a sufficient hardening of the laminate is achieved before contacting the drawing device 9. The step of hardening or curing the composite laminate in a heating chamber may be followed by a cooling step in a cooling chamber 19.

To effectuate the displacement of the composite laminate throughout the device of this invention, use is made of a drawing device 9. The displacement is done in a stepwise discontinuous manner. The displacement may for example be imparted by a set of successive calanders 10, each calander being driven by a motor 12 and a transmission 11. A stepwise displacement may be achieved by using clamping means which are provided to clamp the laminate, move the laminate to a forward position, release the laminate and return to their original position.

If it is desired to produce composite laminate panels of preset dimensions, the composite laminate may be passed through cutting means.

As can be seen from figure 3, as a fibrous reinforcing sheet material use is made of a combination of a sheet of a first material 1, on top of which a sheet of a second material 2A is added. The second material may for example be a fleece or foil of thermoplastic resin, for example Fulcrum commercially available from the Dow Chemical Company. The core material may face either the first material 1, 2 or the second thermoplastic material 2A. In the embodiment of figure 3, the fibrous reinforcing sheet material 1, 2, 2A is heated by the pre-heating device 20, thus facilitating the tufting operation.

The temperature of the composite material is further increased in the pulltrusion device 8, to a temperature at which melting of the second thermoplastic sheet material 2A is achieved and the molten thermoplastic at least partly impregnates the core material 5.

## Claims

1. A method for producing composite laminate comprising at least a first and second face sheet of a fibrous reinforcing material sandwiching between them a sheet of a core material (5), the method comprising the steps of forwarding the sheet of the core material (5), forwarding the first and second face sheet along opposite sides of the core material (5) to form a multilayer laminate, connecting the first and second face sheet to the core material (5), wherein the first and second face sheet and the sheet of core material (5) are connected to each other by tufting together the first layer, the core (5) and the second layer using a substantially continuous fibrous reinforcing material, at least part of the fibrous reinforcing material extending in Z-direction of the laminate, and after the tufting impregnating the laminate with plastic material, wherein the tufting is done by displacing the laminate in a stepwise, discontinuous manner in longitudinal direction, wherein the displacement of the laminate throughout the tufting device is interrupted in the course of each downward and upward movement of the needles and the plastic material is applied using pultrusion.

2. The method as claimed in claim 1, **characterised in that** the fibrous reinforcing material is applied in a geometric pattern, preferably selected from groups of three or four or more columns of Z-direction fibrous reinforcing material.

3. The method of claim 1 or 2, **characterised in that** the fibrous reinforcing material comprises a plurality of fibre bundles or twined or torsioned fibres.

4. The method of any one of claims 1-3, **characterised in that** as the fibrous tufting material, use is made of tows, threads, bundles, yarns or rovings of a fibrous reinforcing material.

5. The method of any one of claims 1-4, **characterised in that** as the fibrous tufting material use is made of a material selected from the group of natural fibres, metal fibres, mineral fibres, glass fibres, carbon fibres, wool, cotton, flax, or synthetic fibres, preferably polyester, polypropylene, polyethylene, polyamide, or mixtures of two or more of these materials.

6. A method as claimed in any one of claims 1-5, **characterised in that**
the core material use is made of a foamed plastic material, preferably foamed polyurethane.

7. The method as claimed in any one of claims 1-6, **characterised in**
**that** as the core material use is made of at least two layers of the same or a different foamed plastic material sandwiching between them a sheet comprising glass or metal fibrous reinforcing material or a mixture thereof.

8. A method as claimed in any one of claims 1-7, **characterised in that**
the first and second face sheets comprise at least one fabric or mat of a fibrous reinforcing material or a stack of two or more of such materials, comprising one or more types of fibres selected from the group of thermoplastic reinforcement fibres, metal fibres, mineral fibres, carbon fibres, synthetic fibres, or a mixture of two or more of these fibres.

9. A method as claimed in any one of claims 1-8, **characterised in that**
at least one of the first and second face sheets comprises a sheet of fibrous reinforcing material comprising metal fibres.

10. A device for the production of a composite laminate comprising a tufting device, means for feeding a first and a second sheet of a laminar reinforcing material on opposite sides of a core (5) to the tufting device for tufting the first and second laminate and the core together, means for advancing the laminate in a stepwise manner through the tufting device, and a pultrusion device (8) for impregnating the tufted composite laminate with a plastic material.

11. A device as claimed in claim 10, **characterised in that** the device
comprises a heated chamber for hardening or curing the impregnated composite laminate.

## Patentansprüche

1. Verfahren zur Herstellung eines Verbundlaminats, mit wenigstens einer ersten und einer zweiten Oberflächenschicht aus einem faserverstärkenden Material, die zwischen sich eine Schicht aus einem Kernmaterial (5) aufnehmen, wobei das Verfahren die folgenden Schritte umfasst: Fördern der Schicht aus dem Kernmaterial (5), Fördern der ersten und zweiten Oberflächenschicht entlang entgegengesetzter Seiten des Kernmaterials (5) zur Bildung eines mehrschichtigen Laminats, Verbinden der ersten und der zweiten Oberflächenschicht mit dem Kernmaterial (5), wobei die erste und die zweite Oberflächenschicht sowie die Schicht aus Kernmaterial (5) miteinander verbunden werden, indem die erste Schicht, der Kern (5) und die zweite Schicht durch Tuften mittels eines im Wesentlichen durchgehenden faserverstärkenden Materials zusammengefügt werden, wobei sich zumindest ein Teil des durchgehenden faserverstärkenden Materials in Z-Richtung des Laminats erstreckt, und Imprägnieren des Laminats mit Kunststoffmaterial nach dem Tuften, wobei das Tuften durch Versetzen des Laminats in einer schrittweisen, diskontinuierlichen Weise in Längsrichtung erfolgt, wobei das Versetzen des Laminats in der gesamten Tuftvorrichtung während jeder Aufwärts- und Abwärtsbewegung der Nadeln unterbrochen wird und das Kunststoffmaterial mittels Pultrusion aufgetragen wird.

2. Verfahren nach Anspruch 1, **dadurch gekennzeichnet, dass** das faserverstärkende Material in einer geometrischen Struktur aufgetragen wird, vorzugsweise ausgewählt aus Gruppen von drei oder vier oder mehreren Reihen von faserverstärkendem Material in Z-Richtung.

3. Verfahren nach Anspruch 1 oder 2, **dadurch gekennzeichnet, dass** das faserverstärkende Material eine Vielzahl von Faserbündeln oder gezwirnte bzw. verdrillte Fasern umfasst.

4. Verfahren nach einem der Ansprüche 1 bis 3, **dadurch gekennzeichnet, dass** Seile, Garne, Büschel, Zwirne oder Faserbündel eines faserverstärkenden Materials als Fasermaterial zum Tuften verwendet werden.

5. Verfahren nach einem der Ansprüche 1 bis 4, **dadurch gekennzeichnet, dass** als das Fasermaterial zum Tuften ein Material verwendet wird, das aus der folgenden Gruppe ausgewählt wird: Naturfasern, Metallfasern, Mineralfasern, Glasfasern, Kohlenstofffasern, Wolle, Baumwolle, Flachs, oder synthetische Fasern, vorzugsweise Polyester, Polypropylen, Polyethylen, Polyamid, oder eine Mischung aus zwei oder mehreren dieser Materialien.

6. Verfahren nach einem der Ansprüche 1 bis 5, **dadurch gekennzeichnet, dass** als das Kernmaterial ein geschäumtes Kunststoffmaterial, vorzugsweise geschäumtes Polyurethan verwendet wird.

7. Verfahren nach einem der Ansprüche 1 bis 6, **dadurch gekennzeichnet, dass** als das Kernmaterial wenigstens zwei Schichten desselben oder verschiedener geschäumter Kunststoffmaterialien verwendet werden, die zwischen sich eine Schicht aufnehmen, die Glas oder faserverstärkendes Metall oder eine Mischung daraus aufweist.

8. Verfahren nach einem der Ansprüche 1 bis 7, **dadurch gekennzeichnet, dass** die erste und die zweite Oberflächenschicht wenigstens ein Gewebe oder eine Matte aus einem faserverstärkenden Material oder einem Stapel aus zwei oder mehreren solcher Materialien umfasst, mit einer oder mehreren Faserarten, die aus der folgenden Gruppe ausgewählt sind: thermoplastische Verstärkungsfasern, Metallfasern, Mineralfasern, Kohlenstofffasern, synthetische Fasern, oder eine Mischung aus zwei oder mehreren dieser Fasern.

9. Verfahren nach einem der Ansprüche 1 bis 8, **dadurch gekennzeichnet, dass** wenigstens eine der ersten und zweiten Oberflächenschichten eine Lage aus faserverstärkendem Material mit Metallfasern umfasst.

10. Vorrichtung zum Herstellen eines Verbundlaminats, mit einer Tuftvorrichtung, Mittel zum Zuführen einer ersten und einer zweiten Schicht aus einem laminaren, verstärkenden Material auf entgegengesetzten Seiten eines Kerns (5) in die Tuftvorrichtung zum Zusammenfügen des ersten und zweiten Laminats und des Kerns durch Tuften, Mittel zum schrittweisen Vorwärtsbewegen des Laminats durch die Tuftvorrichtung, und eine Pultrusionsvorrichtung (8) zum Imprägnieren des getufteten Verbundlaminats mit einem Kunststoffmaterial.

11. Vorrichtung nach Anspruch 10, **dadurch gekennzeichnet, dass** die Vorrichtung eine beheizte Kammer zum Aushärten oder Nachbehandeln des imprägnierten Verbundlaminats umfasst.

## Revendications

1. Procédé de production d'un stratifié composite comprenant au moins des première et deuxième feuilles de face d'un matériau de renfort fibreux prenant en tenaille entre elles une feuille d'un matériau de noyau (5), le procédé comprenant les étapes d'acheminement de la feuille du matériau de noyau (5), d'acheminement des première et deuxième feuilles de face le long de côtés opposés du matériau de noyau (5) pour former un stratifié multicouche, de liaison des première et deuxième feuilles de face au matériau de noyau (5), où les première et deuxième feuilles de face et la feuille de matériau de noyau (5) sont liées les unes aux autres par touffetage de la première couche, du noyau (5) et de la deuxième couche ensemble en utilisant un matériau de renfort fibreux essentiellement continu, au moins une partie du matériau de renfort fibreux s'étendant dans une direction Z du stratifié, et, après le touffetage, d'imprégnation du stratifié avec une matière plastique, où le touffetage est effectué par déplacement pas-à-pas du stratifié, de manière discontinue dans une direction longitudinale, où le déplacement du stratifié à travers le dispositif de touffetage est interrompu au cours de chaque mouvement descendant et ascendant des aiguilles et la matière plastique est appliquée par pultrusion.

2. Procédé tel que revendiqué dans la revendication 1, **caractérisé en ce que** le matériau de renfort fibreux est appliqué selon un motif géométrique, choisi de préférence parmi des groupes de trois ou quatre colonnes ou plus de matériau de renfort fibreux de direction Z.

3. Procédé de la revendication 1 ou 2, **caractérisé en ce que** le matériau de renfort fibreux comprend une pluralité de faisceaux de fibres ou de fibres entrelacées ou torsadées.

4. Procédé de l'une quelconque des revendications 1 à 3, **caractérisé en ce qu'**on utilise, comme matériau fibreux de touffetage, des câbles, des filaments, des faisceaux, des fils ou des mèches d'un matériau de renfort fibreux.

5. Procédé de l'une quelconque des revendications 1 à 4, **caractérisé en ce qu'**on utilise, comme matériau fibreux de touffetage, un matériau choisi dans le groupe constitué de fibres naturelles, de fibres métalliques, de fibres minérales, de fibres de verre, de fibres de carbone, de laine, de coton, de lin, ou de fibres synthétiques, de préférence de polyester, de polypropylène, de polyéthylène, de polyamide, ou de mélanges de deux ou plus de ces matériaux.

6. Procédé tel que revendiqué dans l'une quelconque des revendications 1 à 5, **caractérisé en ce qu'**on utilise, comme matériau de noyau, une mousse de matière plastique, de préférence une mousse de polyuréthane.

7. Procédé tel que revendiqué dans l'une quelconque des revendications 1 à 6, **caractérisé en ce qu'**on utilise, comme matériau de noyau, au moins deux couches de la même mousse de matière plastique ou d'une mousse de matière plastique différente prenant en tenaille entre elles une feuille comprenant un matériau de renfort fibreux métallique ou en verre ou leur mélange.

8. Procédé tel que revendiqué dans l'une quelconque des revendications 1 à 7, **caractérisé en ce que** les première et deuxième feuilles de face comprennent au moins un tissu ou mat d'un matériau de renfort fibreux ou un empilement de deux ou plus de ces matériaux, comprenant un ou plusieurs type(s) de fibres choisies dans le groupe constitué de fibres de renfort thermoplastiques, de fibres métalliques, de fibres minérales, de fibres de carbone, de fibres synthétiques, ou d'un mélange de deux ou plus de ces fibres.

9. Procédé tel que revendiqué dans l'une quelconque des revendications 1 à 8, **caractérisé en ce qu'**au moins l'une des première et deuxième feuilles de face comprend une feuille de matériau de renfort fibreux comprenant des fibres métalliques.

10. Dispositif pour la production d'un stratifié composite comprenant un dispositif de touffetage, un moyen pour fournir des première et deuxième feuilles d'un matériau de renfort laminaire sur des côtés opposés d'un noyau (5) au dispositif de touffetage pour touffeter les premier et deuxième stratifiés et le noyau ensemble, un moyen pour faire avancer le stratifié pas-à-pas à travers le dispositif de touffetage, et un dispositif de pultrusion (8) pour imprégner le stratifié composite touffeté d'une matière plastique.

11. Dispositif tel que revendiqué dans la revendication 10, **caractérisé en ce que** le dispositif comprend une chambre chauffée pour durcir ou cuire le stratifié composite imprégné.
